# EUROPÄISCHE PATENTSCHRIFT

(11) **EP 1 843 909 B1**
(45) Veröffentlichungstag und Bekanntmachung des Hinweises auf die Patenterteilung: **24.02.2010**
(21) Anmeldenummer: 06701387.0
(22) Anmeldetag: 31.01.2006
(51) Int. Cl.: B60J 5/04

(54) **VORRICHTUNG ZUM ÜBERFÜHREN DER WAND EINES TRANSPORTBEHÄLTERS ZWISCHEN EINER SCHLIESSSTELLUNG UND EINER OFFENSTELLUNG UND TRANSPORTBEHÄLTER**
DEVICE FOR TRANSFERRING THE WALL OF A TRANSPORT CONTAINER BETWEEN A CLOSED POSITION AND AN OPEN POSITION AND TRANSPORT CONTAINER
DISPOSITIF DE TRANSFERT DE LA PAROI D'UN CONTENANT DE TRANSPORT ENTRE UNE POSITION FERMEE ET UNE POSITION OUVERTE ET CONTENANT DE TRANSPORT

(30) Priorität: 31.01.2005 AT 1482005
(43) Veröffentlichungstag der Anmeldung: 17.10.2007
(73) Patentinhaber: Strasser, Johann Sen, 5301 Eugendorf (AT); Strasser, Johann Jun, 5301 Eugendorf (AT)
(72) Erfinder: Strasser, Johann Sen, 5301 Eugendorf (AT); Strasser, Johann Jun, 5301 Eugendorf (AT)
(74) Vertreter: Beetz, Rainer
(86) Internationale Anmeldenummer: PCT/AT2006/000037
(87) Internationale Veröffentlichungsnummer: WO 2006/079137

(56) Entgegenhaltungen:
- EP-A- 0 738 649
- BE-A- 719 007
- DE-A1- 3 233 669
- DE-A1- 10 015 545
- US-A- 4 140 339

## Beschreibung

Die Erfindung betrifft eine Vorrichtung zum Überführen einer Wand eines Transportbehälters, insbesondere eines Fahrzeugaufbaus oder eines Containers, zwischen einer Schließstellung und einer Offenstellung nach dem Oberbegriff des Patentanspruches 1.

Aus dem Stand der Technik sind bereits verschiedene Transportbehälter bzw. Fahrzeugaufbauten mit verschwenkbaren Seitenwänden bekannt, um in der Offenstellung der verschwenkten Seitenwände Zugang zu einem Laderaum zu erlangen.

Beispielsweise ist aus der DE 100 15 545 A1 ein Wechselbehälter bekannt, dessen Längsseitenwände in einem Stück verschwenkbar sind, so dass diese in der geöffneten Stellung im Wesentlichen horizontal über dem Behälterdach zu liegen kommen. Angelenkt sind die Längswände mittels jeweils eines Hebelpaares an den Stirnseiten des Behälters. Die Hebel sind im oberen und unteren Wandbereich einerseits, und an der Behälteroberseite und im Mittelbereich der Stirnwände andererseits befestigt. Während des Öffnens einer Wand vollziehen die Arme eine Drehung von annähernd 180°.

Der DE 32 33 669 A1 ist ein Aufbau für einen LKW zu entnehmen, wobei eine Seite des Aufbaues motorisch angetrieben geöffnet werden kann. Hierbei kann diese Wand einteilig auf die Oberseite des Wagens geschwenkt werden, wo sie annähernd horizontal zu liegen kommt.

In der DE 83 37 090 U1 wird ein Kastenaufbau für LKWs gezeigt, dessen Seitenwände nach oben hin weggeklappt werden können. Die Schwenkbewegung wird durch Hebelpaare gesteuert, wobei ein Hebel im oberen Wandbereich und an der Oberseite des Kastenaufbaues befestigt ist, und der zweite Hebel im unteren Wandbereich und am Vertikalsteher des Fahrzeuges. Hierbei wird die Wand jedoch nicht einteilig verschwenkt.

Der DE 40 06 532 A1 ist ein Fahrzeugaufbau mit wenigstens einer öffenbaren Seitenwand zu entnehmen. Die Hebel zur Verschwenkung der Seitenwand sind an der Oberseite bzw. Im seitlichen Randbereich der Stirnseiten des Fahrzeuges und im oberen und unteren Abschnitt der zu öffnenden Seitenwand angelenkt. Auch hier besteht die Seitenwand nicht nur aus einem Element, sondern setzt sich aus zwei verschwenkbaren Teilen zusammen.

Die FR 2 710 019 A1 zeigt einen Aufbau für einen LKW mit nach oben hin verschwenkbaren Seitenwänden. Um für die Anbringung der Hebel nicht auf vollflächige Stirn- oder Trennwände angewiesen zu sein, wird auch hier, ähnlich wie in Anspruch 4 des Anmeldungsgegenstandes, auf die Verwendung von L-förmigen Armen zurückgegriffen. Die Seitenwände bestehen aus zwei miteinander gelenkig verbundenen Teilen.

Weiters ist aus der US 4,140,339 eine Schwenkvorrichtung für eine zweiteilige Seitenwand bekannt, bei welcher ein unterer Seitenwandteil zwischen zwei Lenkern aufgenommen ist und ein oberer Abschnitt der Seitenwand mit einer Abdeckung, die auf einem Schwingarm gelagert ist, versehen ist.

Ebenso ist in der BE 719 007 A eine zweiteilige Wand mit einer Verschwenkvorrichtung gezeigt, bei welcher ein oberer Seitenwandteil und ein unterer Seitenwandteil schwenkbar zueinander gelagert sind.

Aus der EP 0 738 649 B1 ist ein Fahrzeugaufbau mit einer zweiteiligen Wand bekannt, die an dem Transportbehälter schwenkbar gelagert ist. Um die zweiteilige Wand von ihrer Schließstellung in eine Offenstellung zu verschwenken, ist eine vergleichsweise komplexe Vorrichtung vorgesehen, um einerseits den um eine feste Schwenkachse am Transportbehälter schwenkbar gelagerten Wandteil zu verschwenken und zugleich den an dem ersten Wandteil schwenkbar gelagerten zweiten Wandteil gegenüber dem ersten Wandteil in eine kompakte, zusammengefaltete Offenstellung zu verschwenken.

Darüber hinaus benötigen derartige Schwenkvorrichtungen mit zweiteiligen Wänden relativ viel Platz neben dem Transportbehälter, um zwischen einer Schließ- und einer Offenstellung verschwenkt werden zu können.

Ziel der vorliegenden Erfindung ist es demzufolge eine vergleichsweise einfache Vorrichtung zum Überführen einer Wand zwischen einer Schließstellung und einer Offenstellung zu schaffen, welche insbesondere auch verwendbar ist, wenn neben und oberhalb dem Transportbehälter relativ wenig Platz vorhanden ist.

Dies wird bei der Vorrichtung der eingangs angeführten Art durch die Maßnahme nach dem kennzeichnenden Teil des Anspruches 1 erzielt.

Hinsichtlich einer weitgehend automatischen Verriegelung der Wand in ihrer Schließstellung ist es günstig, wenn mindestens einer der Lenker entgegen einer Federkraft längenveränderlich ist, so dass die Wand zuverlässig mit Hilfe der Federkraft in ihrer Verriegelungsstellung gehalten wird.

Wenn die beiden Lenker zwischen der Schließstellung und der Offenstellung der Wand um ca. 180° verschwenken, kann der erforderliche Schwenkwinkel der Lenker gegenüber bekannten Schwenkvorrichtungen, bei welchen diese um ca. 270° verschwenkt werden müssen, vorteilhafterweise deutlich verringert werden.

Um eine möglichst kompakte Anordnung der Wand in ihrer Offenstellung zu erzielen und somit im Falle eines Fahrzeugaufbaus auch das Fahren mit dem Fahrzeug in der Offenstellung der Wand zu ermöglichen, ist es günstig, wenn die Wand in einer Offenstellung im Wesentlichen horizontal über einer oberen Deckfläche des Transportbehälters angeordnet ist.

Um das Überführen zwischen der Schließ- und der Offenstellung der Wand möglichst automatisch durchführen zu können, ist es von Vorteil, wenn zumindest ein Lenker motorisch angetrieben ist, wobei hier verschiedenste Antriebe zur Anwendung kommen können. Beispielsweise sind hier hydraulische, pneumatische, mechanische oder dgl. Antriebe möglich. Selbstverständlich sind jedoch auch Ausführungsformen ohne einen motorischen Antrieb denkbar, bei welchen das Öffnen beispielsweise mit Hilfe eines Krans oder eines Hubstaplers erfolgt. Sofern es sich bei der zu verschiebenden Wand um eine Seitenwand handelt, erfolgt das Überführen in die Schließstellung ohnedies auf einfache Weise aufgrund des Eigengewichts der Wand.

Um die Wand in ihrer Schließstellung gegen ungewollte Zugriffe zu verriegeln, ist es von Vorteil, wenn zum Verriegeln der Wand in der Schließstellung Verschlusselemente an der oberen und/oder unteren Kante der Wand vorgesehen sind. Beispielsweise kann mit der oberen Kante eine Verriegelungsnase oder dgl., die in einer entsprechenden Nut an der oberen Deckfläche des Transportbehälters eingreift, vorgesehen sein. An der unteren Kante der Wand kann eine Verschluss- bzw. Verriegelungsvorrichtung angeordnet sein, welche die Wand beim Verschließen in eine komplementäre Ausbuchtung am unteren Rand des Transportbehälters zwingt und somit eine sichere und dichte Verbindung der Wand mit dem übrigen Transportbehälter gewährleistet. Der Transportbehälter ist somit zuverlässig gegen Diebstahl gesichert.

Um zu gewährleisten, dass ein Großteil von abrinnendem Wasser, beispielsweise im Fall eines Regengusses, von der Wand abgeleitet wird und somit einen Wassereintritt in das Innere des Transportbehälters zu vermeiden, ist es günstig, wenn die Wand zumindest eine gegenüber der Horizontalen geringfügig geneigte Rinne aufweist.

Die Erfindung betrifft weiters einen Transportbehälter, insbesondere Fahrzeugaufbau oder Container, wobei zumindest eine Vorrichtung nach einem der Ansprüche 1 bis 13 zum Überführen einer Wand zwischen einer Schließstellung und einer Offenstellung vorgesehen ist. Zwecks Vermeidung von Wiederholungen wird auf die hiermit erzielten Vorteile der vorstehende Ausführungen verwiesen.

Um insbesondere im Fall eines Fahrzeugaufbaus die beiden Seitenwände von einer Schließstellung in eine Offenstellung überführen zu können und somit beidseitig einen Zutritt zu dem Laderaum des Fahrzeugaufbaus in der Offenstellung der Wände zu erlangen, ist es von Vorteil, wenn zwei Vorrichtungen zum Überführen von zwei gegenüberliegenden Wänden des Transportbehälters zwischen einer Schließstellung und einer Offenstellung vorgesehen sind.

Zudem kann auf einfache Weise ein Hubdach geschaffen werden, wenn vertikale Verbindungsstützen des Transportbehälters längenveränderlich, z.B. teleskopartig, ausgebildet sind. Hiedurch kann in der Offenstellung der Seitenwände die gesamte Dachfläche gehoben werden und somit das Beladen und Entladen des Transportbehälters erleichtert werden.

Die Erfindung wird nachstehend anhand von in der Zeichnung dargestellten bevorzugten Ausführungsbeispielen auf die sie jedoch nicht beschränkt sein soll, noch näher erläutert. Im Einzelnen zeigen in der Zeichnung:
Fig. 1a eine Rückansicht eines Fahrzeugaufbaus mit zwei verschieblich gelagerten Seitenwänden in ihrer Schließstellung;
Fig. 1b eine Rückansicht gemäß Fig. 1a, jedoch mit einer Seitenwand in ihrer Offenstellung;
Fig. 1c eine Rückansicht gemäß den Fig. 1a und 1b mit beiden Seitenwänden in ihrer Offenstellung;
Fig. 1d eine Rückansicht gemäß Fig. 1c mit der Dachfläche in einer gehobenen Stellung;
Fig. 2a eine Detailansicht einer Seitenwand in ihrer Schließstellung;
Fig. 2b eine Detailansicht der verschieblichen Seitenwand zwischen der Schließ- und der Offenstellung;
Fig. 2c eine Detailansicht einer Seitenwand in ihrer Offenstellung;
Fig. 3 einen Schnitt des oberen Eckbereichs der Wand in ihrer Schließstellung;
Fig. 4 eine Schnittansicht des unteren Endabschnitts der Wand in ihrer Schließstellung; und
Fig. 5 einen Container mit einer verschieblich gelagerten oberen Dachwand.

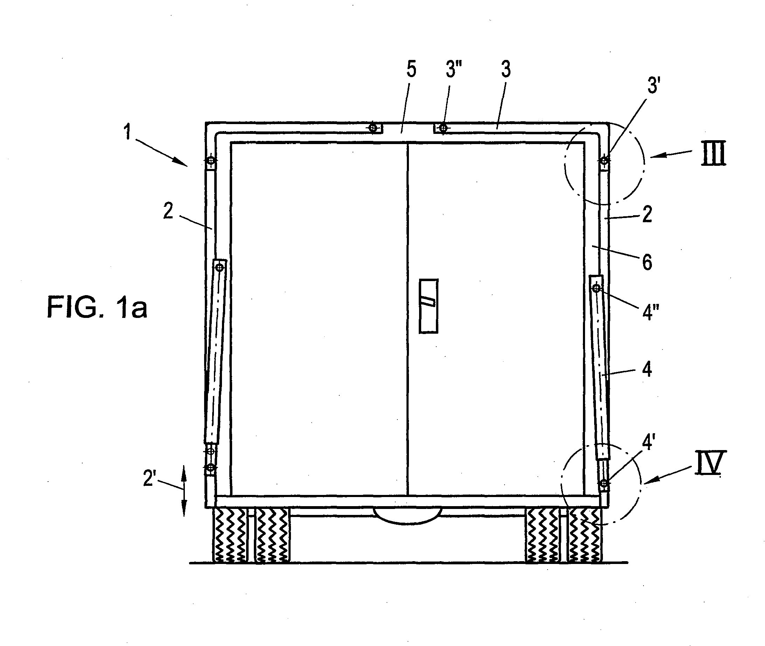

In Fig. 1a ist ein Fahrzeugaufbau als Transportbehälter 1 gezeigt, der seitlich jeweils eine verschieblich gelagerte Wand 2 aufweist, die jeweils an einem ersten L-förmig ausgebildeten Lenker 3, der im oberen Endbereich der Wand 2 über eine Drehachse 3' an der Wand 2 angelenkt ist, und einem zweiten Lenker 4, der im unteren Endbereich der Wand 2 über eine Drehachse 4' an der Wand 2 angelenkt ist. Bei dem gezeigten Ausführungsbeispiel sind beidseits der Wände 2 jeweils ein Lenker 3 und ein Lenker 4 vorgesehen, wobei der Einfachheit halber nachfolgend jeweils nur auf einen Lenker 3 bzw. 4 Bezug genommen wird.

Der obere Lenker 3 ist hierbei in der Schließstellung der Wand 2 im Wesentlichen horizontal angeordnet, wobei er an dem Fahrzeugaufbau 1 auf dem Niveau einer oberen Dachfläche 5 um eine Drehachse 3" schwenkbar gelagert ist. Der zweite Lenker 4 hingegen ist in der Schließstellung der Wand 2 im Wesentlichen vertikal angeordnet und an einem die von der Wand 2 in der Schließstellung verschlossene Ladeöffnung begrenzenden Vertikalsteher 6 des Transportbehälters 1 um eine Drehachse 4'' angelenkt.

Weiters ist in Fig. 1a noch schematisch gezeigt, dass der Lenker 4 teleskopartig ausgebildet ist, so dass die Wand 2 in Pfeilrichtung 2' insbesondere in ihrer Schließstellung vertikal verschieblich ist. Hiermit kann die Wand 2 in der Schließstellung gegen eine in dem Lenker 4 vorgesehene Federkraft, beispielsweise eine Gasfeder, in eine Verriegelungsstellung überführt werden, in welcher sie mit Hilfe der Federkraft zuverlässig gehalten wird. Wie schematisch dargestellt, kann am Ende des Fahrzeugaufbaus auch eine Tür angeordnet sein, welche unabhängig von den Wänden 2 geöffnet werden kann.

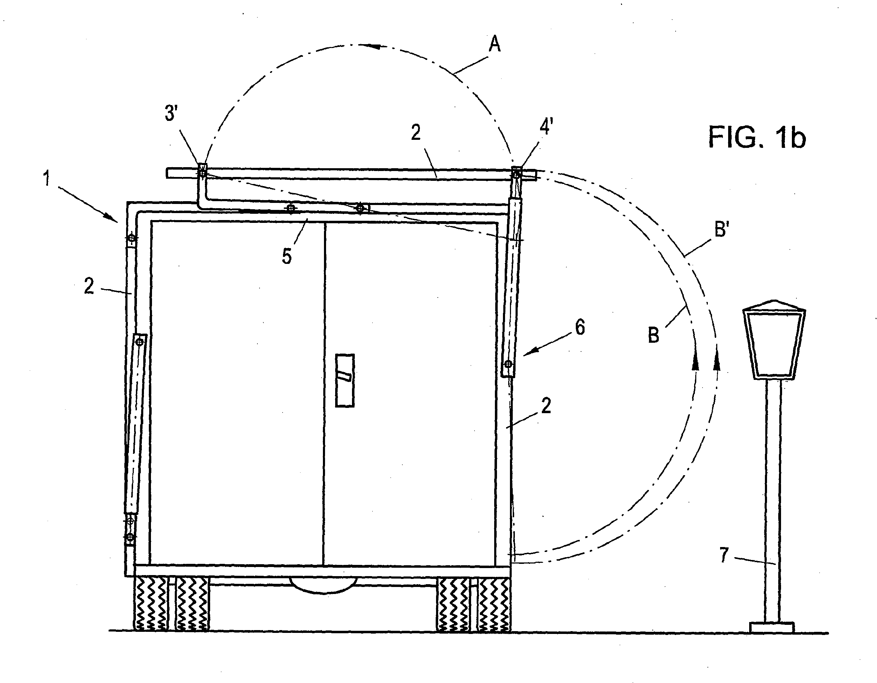

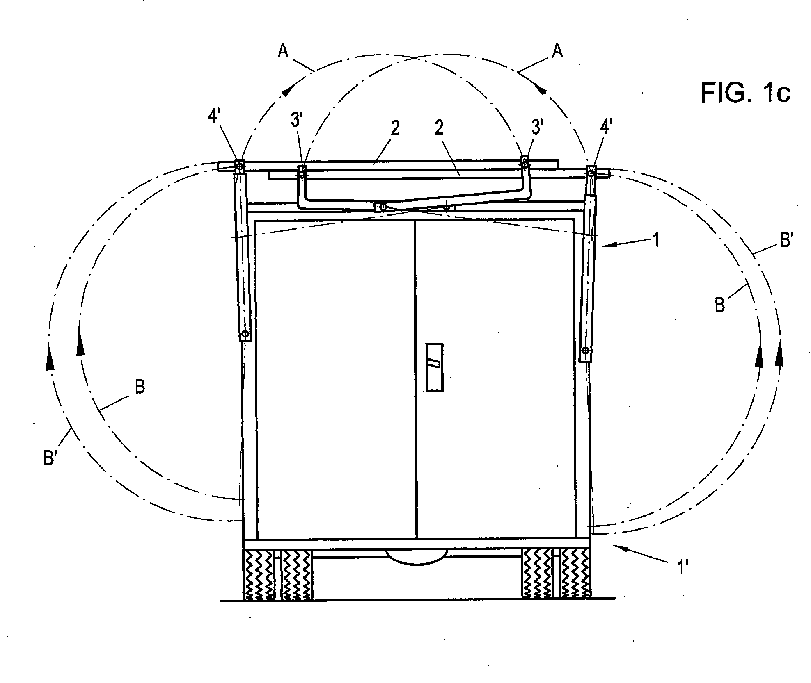

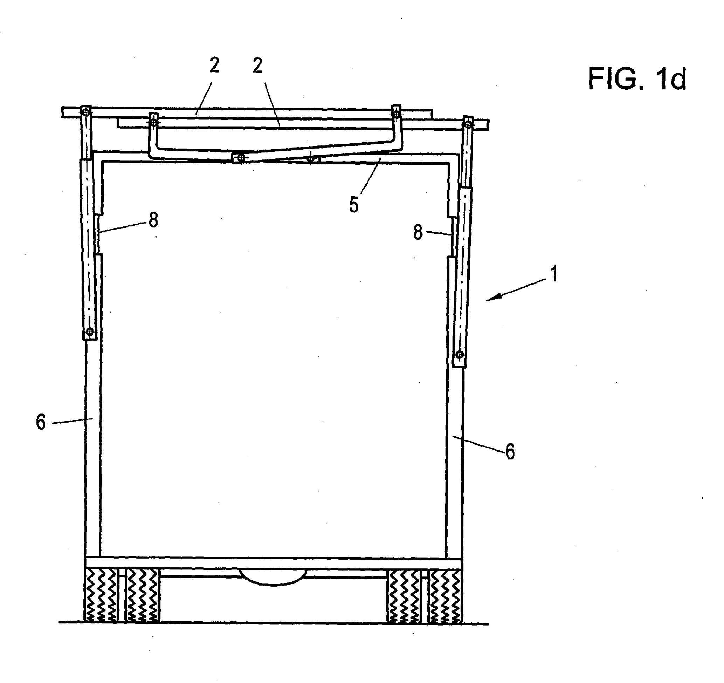

In Fig. 1b ist die linke Wand 2 nach wie vor in der in Fig. 1 gezeigten Schließstellung gezeigt, die rechte Wand 2 ist hingegen in einer der über der oberen Dachfläche 5 verschobenen Offenstellung gezeigt, so dass auf die Ladeöffnung 6 zugegriffen werden kann. Um ein ungehindertes Verschwenken der linken und der rechten Wand 2 zu gewährleisten, ist der obere Lenker 3 der rechten Wand 2 in einer Draufsicht innerhalb des Lenkers 3 der linken Wand angeordnet, so dass nach Überführen der rechten Wand 2 in ihre in Fig. 1b gezeigte Offenstellung auch die linke Wand 2 problemlos in ihre Offenstellung überführt werden kann (vgl.
Fig. 1c) .

Insbesondere ist in Fig. 1b anhand der strichpunktierten Linien A, B ersichtlich, dass die Drehachsen 3' bzw. 4' beim Überführen der Wand 2 von der in Fig. 1a gezeigten Schließstellung in die in Fig. 1b gezeigte Offenstellung entlang zweier unterschiedlicher Schwenkradien wandern, wobei die Drehachse 3' des oberen Lenkers 3 entlang dem Schwenkradius gemäß der Linie A und die Drehachse 4' des zweiten Lenkers 4 entlang dem Schwenkradius B verläuft. Durch die unterschiedlichen Schwenkradien A, B wird somit ein platzsparendes Überführen der Wand 2 von der Schließin die Offenstellung und umgekehrt ermöglicht. Weiters ist der Schwenkradius B' des äußersten Punktes, des über der Drehachse 4' hinausragenden Wandteils skizziert, durch welchen der Platzbedarf während des Überführens zwischen der Schließ- und der Offenstellung festgelegt wird. Hierdurch kann, wie anhand der seitlich neben dem Fahrzeugaufbau 1 schematisch gezeigten Laterne 7 ersichtlich, bei vergleichsweise geringem Platz neben dem Fahrzeugaufbau 1 zuverlässigerweise die Wand 2 zwischen der Schließstellung und der Offenstellung überführt werden.

In Fig. 1c sind beide Wände 2 des Fahrzeugaufbaus 1 in ihrer oberen Offenstellung gezeigt, wobei ersichtlich ist, dass durch die plane Auflage der beiden Wände 2 aufeinander eine kompakte Anordnung der Wände in ihrer Offenstellung möglich ist, so dass - sofern das Ladegut im Fahrzeugaufbau 1 gesichert ist - auch in der Offenstellung der Wände 2 ein Fahrzeug 1' des Fahrzeugaufbaus 1 bewegt werden kann. Zudem sind wiederum die Schwenkradien A bzw. B, B' ersichtlich, welche die Drehachsen 3' bzw. 4' während des Überführens zwischen der Offen- und der Schließstellung durchlaufen. Damit es zu keiner Kollision der Lenker 3 während des Öffnens der Wände 2 kommt, wird zuerst die eine (im gezeigten Beispiel die rechte Wand 2) und dann die andere (im gezeigten Beispiel die linke Wand 2) geöffnet. Die Lenker 3 sind entsprechend zueinander versetzt.

In Fig. 1d ist der Fahrzeugaufbau 1 gemäß der Fig. 1c in der Offenstellung der beiden Wände gezeigt, wobei die Vertikalsteher 6 zwischen Boden und Dach des Fahrzeugaufbaus zusätzlich Hubzylinder 8 oder dgl. aufweisen, so dass die obere Dachfläche 5 in der Offenstellung der Wände 2 gehoben werden kann und somit der Laderaum zwecks einer einfachen Beladung bzw. Entladung mit Ladegut vergrößert werden kann. Ebenso können die Vertikalsteher 6 auch ohne Hubzylinder lediglich längenveränderlich ausgebildet sein und die Hubbewegung über die Lenker 4 vorgenommen werden.

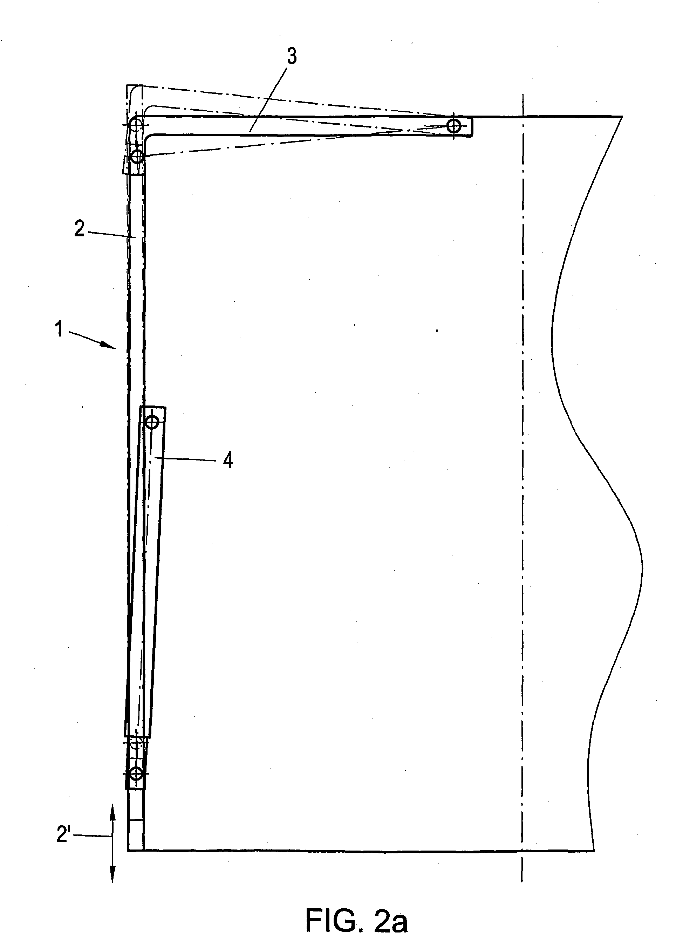

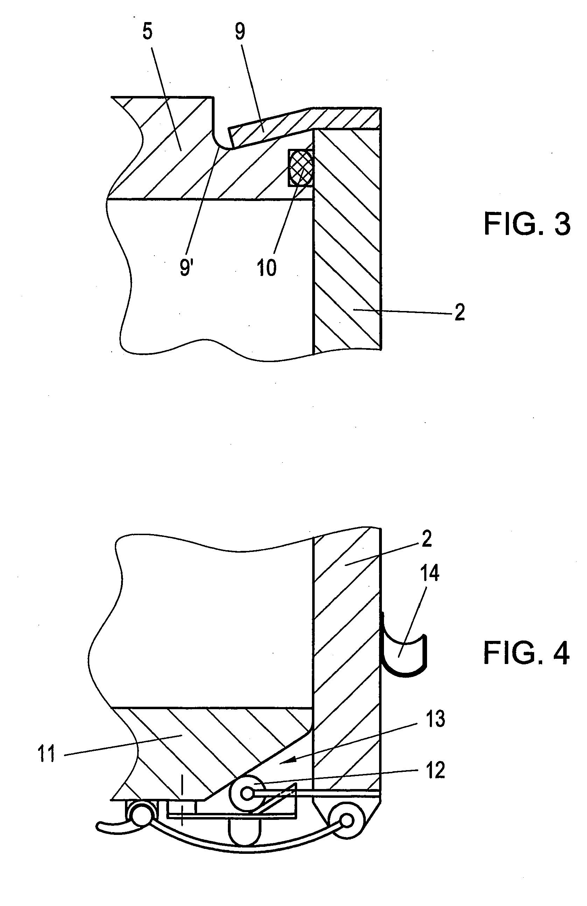

In Fig. 2a ist im Detail eine Seitenwand 2 in ihrer Schließstellung gezeigt, wobei insbesondere schematisch skizziert ist, dass der obere Lenker 3 bei Auflage der Wand 2 auf den Vertikalstehern 6 zunächst noch in einer geringfügig gegenüber der horizontalen geneigten Stellung angeordnet ist, so dass ein gewisses Spiel vorhanden ist, um die Wand 2 in Pfeilrichtung 2' entgegen der Federkraft nach unten zu verschieben und somit die im unteren Endbereich der Wand 2 vorgesehenen Verriegelungselemente (vgl. Fig. 4) miteinander in Verbindung zu bringen.

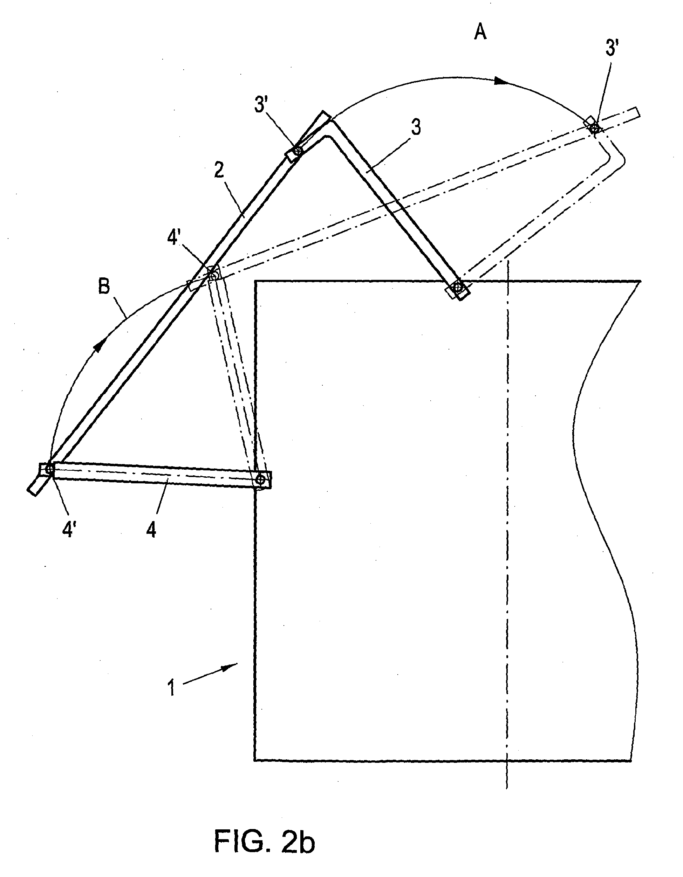

In Fig. 2b ist die Wand 2 in einer Zwischenstellung zwischen der im Wesentlichen vertikalen Schließstellung und der im Wesentlichen horizontalen Offenstellung gezeigt, wobei auch hier insbesondere der Verlauf der Drehachsen 3', 4' entlang der unterschiedlichen Schwenkradien A bzw. B skizziert ist.

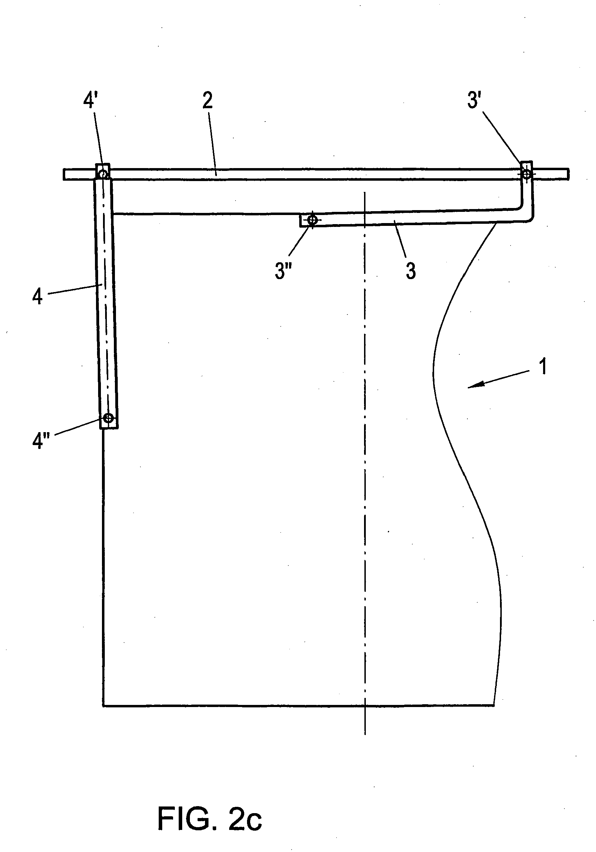

In Fig. 2c ist die Wand 2 sodann in ihrer Offenstellung gezeigt, wobei insbesondere ersichtlich ist, dass die Lenker 3, 4 gegenüber ihrer in Fig. 2a gezeigten Schließstellung lediglich um 180° um die fest angeordneten Drehachsen 3" bzw. 4'' verschwenkt wurden, so dass gegenüber bekannten Vorrichtungen zum Öffnen von Behältern eine deutlich verringerte Schwenkbewegung der Lenker 3, 4 durchgeführt wird.

In Fig. 3 ist im Detail die obere Eckverbindung zwischen der Wand 2 und der oberen Deckfläche 5 ersichtlich, wobei an der oberen Kante der Wand 2 eine Verriegelungsnase 9 angeordnet ist, die in der Schließstellung der Wand 2 in eine entsprechende Nut 9' der oberen Deckfläche 5 eingreift. Zudem ist ein Dichtmaterial 10 ersichtlich, um einen ungewollten Wassereintritt in das Innere des Fahrzeugaufbaus 1 zu verhindern.

In Fig. 4 ist im Detail die untere Eckverbindung zwischen einer Bodenfläche 11 und der Wand 2 gezeigt, wobei hier die Wand 2 an ihrer unteren Kante eine Verschlusseinrichtung mit einer Rolle 12 aufweist, welche beim Verschieben der Wand 2 entgegen der Federkraft des längenveränderlichen Lenkers 4 in einer Aufnahmeöffnung 13 verriegelt wird. Über einen Spanngurt oder dgl. kann die Wand 2 zusätzlich in der geschlossenen Stellung fixiert und somit eine stabile Einheit gebildet werden, welche den während der Fahrt eines solchen Fahrzeugaufbaus auftretenden Kräften und Spannungen stand hält. Die Verriegelung der Wand 2 in der geschlossenen Stellung kann auch mit an der unteren Kante der Wand 2 angeordneter verschwenkbarer Halterung geschehen, welche über den Boden des Fahrzeugaufbaus geklappt werden kann (nicht dargestellt). In hochgeklappter Stellung kann diese Halterung gleichzeitig als Wasserrinne dienen. Zudem ist schematisch eine Rinne 14 ersichtlich, über welche etwaiges Regenwasser abgeleitet werden kann.

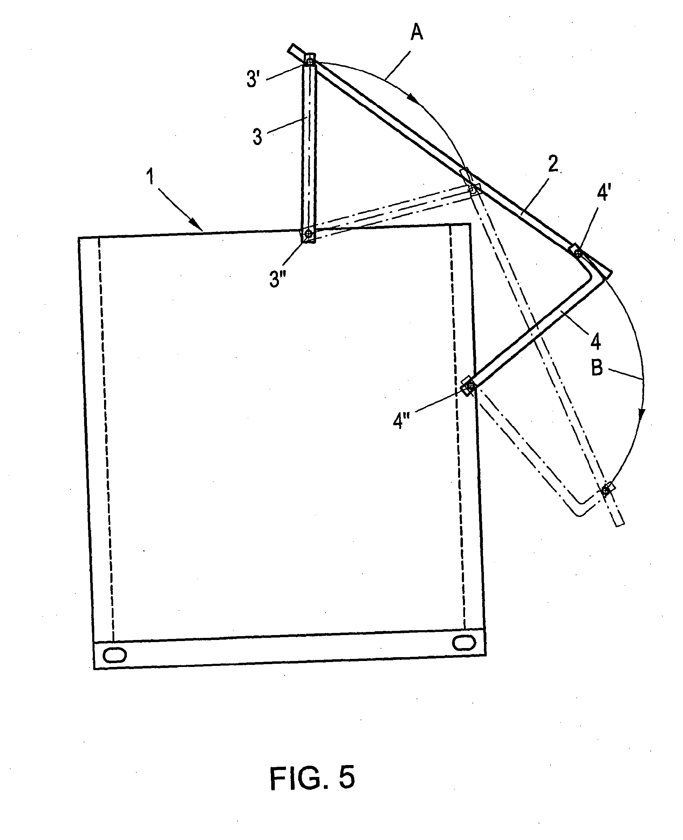

In Fig. 5 ist ein weiteres Ausführungsbeispiel gezeigt, bei welchem als Transportbehälter 1 ein Container vorgesehen ist, der eine obere verschiebliche Wand 2 aufweist, die an den Lenkern 3, 4 angelenkt ist. Ebenso wie bei den vorstehend beschriebenen Ausführungsbeispielen wandern die Drehachsen 3', 4' beim Öffnen der oberen Wand bzw. des Dachs 2 des Containers 1 entlang der Schwenkradien A, B, so dass relativ wenig Platz während des Öffnens bzw. Schließens des Dachs 2 erforderlich ist. Eine derartige Ausführung eignet sich besonders gut für Schüttgut, welches vorschriftsgemäß nicht mehr in offenen Behältern transportiert werden darf, sondern mit Planen bzw. einem Deckel verschlossen werden muss.

Die Wand 2 kann aus den verschiedensten Materialien bestehen, wobei insbesondere eine Ausführung aus Metall, Kunststoff oder auch aus einem mit einer Plane überzogenen Rahmen denkbar ist.

Weiters kann die Wand 2 auch hinsichtlich einer Verbesserung der aerodynamischen Verhältnisse mit einer bestimmten Oberflächenbeschaffenheit, insbesondere Rauigkeit, versehen werden. Aufgrund der einteiligen bzw. einstückigen Ausbildung der Wand 2 kann diese auch auf einfache Weise mit verschiedensten Werbeaufdrucken bzw. Dekorationen versehen werden.

Selbstverständlich ist der Erfindungsgegenstand nicht auf die vorstehend genannten bevorzugten Ausführungsbeispiele beschränkt, sondern kann beispielsweise auch bei Wohnmobilen oder dgl. eingesetzt werden, bei welchen durch das Überführen einer Wand in eine (teilweise) Offenstellung eine offene Terrasse geschaffen werden kann.

## Patentansprüche

1. Vorrichtung zum Überführen einer Wand (2) eines Transportbehälters (1), insbesondere eines Fahrzeugaufbaus oder eines Containers, zwischen einer Schließstellung und einer Offenstellung mit einem ersten und einem zweiten Lenker (3, 4), die jeweils an dem Transportbehälter (1) und an der Wand (2) des Transportbehälters (1) um eine Drehachse (3', 4'; 3'', 4'') schwenkbar gelagert sind, wobei die Wand (2) einteilig ausgebildet ist und die beiden Drehachsen (3', 4') zwischen den Lenkern (3, 4) und der Wand (2) während des Überführens der Wand (2) entlang unterschiedlicher Kreisbahnen (A, B) wandern, **dadurch gekennzeichnet, dass** mindestens ein Lenker (3, 4) längenveränderlich ist.

2. Vorrichtung nach Anspruch 1, **dadurch gekennzeichnet, dass** in der Schließstellung der Wand (2) der längenveränderliche Lenker (3, 4) im Wesentlichen parallel zu der Wand (2) angeordnet ist.

3. Vorrichtung nach Anspruch 1, **dadurch gekennzeichnet, dass** der längenveränderliche Lenker (3, 4) teleskopartig verlängerbar ist.

4. Vorrichtung nach Anspruch 1 oder 2, **dadurch gekennzeichnet, dass** die Drehachse (3'') zwischen dem Transportbehälter (1) und dem ersten Lenker (3) im Wesentlichen auf Höhe einer oberen Deckfläche (5) des Transportbehälters (1) angeordnet ist.

5. Vorrichtung nach Anspruch 4, **dadurch gekennzeichnet, dass** der erste Lenker (3), der im oberen Endbereich der Wand (2) an dieser angelenkt ist, in der Schließstellung der Wand (2) im Wesentlichen horizontal angeordnet ist.

6. Vorrichtung nach einem der Ansprüche 1 bis 5, **dadurch gekennzeichnet, dass** der erste Lenker (3) im Wesentlichen L-förmig ausgebildet ist, wobei der die Drehachse (3') zwischen der Wand (2) und dem Lenker (3) aufweisende kurze Schenkel des Lenkers (3) in der Schließstellung im Wesentlichen vertikal angeordnet ist.

7. Vorrichtung nach einem der Ansprüche 1 bis 6, **dadurch gekennzeichnet, dass** die Drehachse (4'') zwischen dem Transportbehälter (1) und dem zweiten Lenker (4) in einem die verschwenkbare Wand (2) in ihrer Schließstellung seitlich angrenzenden Vertikalsteher (6) angeordnet ist.

8. Vorrichtung nach Anspruch 7, **dadurch gekennzeichnet, dass** der zweite Lenker (4), der im unteren Endbereich der Wand an dieser angelenkt ist, in der Schließstellung der Wand (2) im Wesentlichen vertikal angeordnet ist.

9. Vorrichtung nach einem der Ansprüche 1 bis 8, **dadurch gekennzeichnet, dass** der zweite Lenker (4) längenveränderlich, z.B. teleskopartig verlängerbar, ist.

10. Vorrichtung nach Anspruch 9, **dadurch gekennzeichnet, dass** der zweite Lenker (4) entgegen einer Federkraft längenveränderlich ist.

11. Vorrichtung nach einem der Ansprüche 1 bis 10, **dadurch gekennzeichnet, dass** die beiden Lenker (3, 4) zwischen der Schließstellung und der Offenstellung der Wand um ca. 180° verschwenken.

12. Vorrichtung nach einem der Ansprüche 1 bis 11, **dadurch gekennzeichnet, dass** die Wand (2) in einer Offenstellung im Wesentlichen horizontal über einer oberen Deckfläche (5) des Transportbehälters (1) angeordnet ist.

13. Vorrichtung nach einem der Ansprüche 1 bis 12, **dadurch gekennzeichnet, dass** zumindest ein Lenker (3, 4) motorisch angetrieben ist.

14. Vorrichtung nach einem der Ansprüche 1 bis 13, **dadurch gekennzeichnet, dass** zum Verriegeln der Wand (2) in der Schließstellung Verschlusselemente (9, 9'; 12, 13) an der oberen und/oder unteren Kante der Wand (2) vorgesehen sind.

15. Vorrichtung nach einem der Ansprüche 1 bis 14, **dadurch gekennzeichnet, dass** die Wand (2) zumindest eine gegenüber der Horizontalen geringfügig geneigte Rinne (14) aufweist.

16. Transportbehälter (1), insbesondere Fahrzeugaufbau oder Container, **dadurch gekennzeichnet, dass** zumindest eine Vorrichtung nach einem der Ansprüche 1 bis 14 zum Überführen einer Wand (2) zwischen einer Schließstellung und einer Offenstellung vorgesehen ist.

17. Transportbehälter nach Anspruch 16, **dadurch gekennzeichnet, dass** zwei Vorrichtungen zum Überführen von zwei gegenüberliegenden Wänden (2) des Transportbehälters (1) zwischen einer Schließstellung und einer Offenstellung vorgesehen sind.

18. Transportbehälter nach Anspruch 17, **dadurch gekennzeichnet, dass** vertikale Verbindungsstützen (6) des Transportbehälters (1) längenveränderlich, z.B. teleskopartig, ausgebildet sind.

## Claims

1. Device for transferring a wall (2) of a transport container (1), in particular of a vehicle body or of a container, between a closed position and an open position with a first and a second guide (3, 4), which are respectively mounted on the transport container (1) and on the wall (2) of the transport container (1) so as to be pivotable about a rotation axis (3', 4'; 3", 4"), wherein the wall (2) is formed as one piece and the two rotation axes (3', 4') travel between the guides (3, 4) and the wall (2) during the transfer of the wall (2) along different circular paths (A, B), **characterized in that** at least one guide (3, 4) is variable in length.

2. Device according to Claim 1, **characterized in that** in the closed position of the wall (2), the guide (3, 4) which is variable in length is arranged substantially parallel to the wall (2) .

3. Device according to Claim 1, **characterized in that** the guide (3, 4) which is variable in length is able to be lengthened telescopically.

4. Device according to Claim 1 or 2, **characterized in that** the rotation axis (3'') is arranged between the transport container (1) and the first guide (3) substantially at the height of an upper cover surface (5) of the transport container (1).

5. Device according to Claim 4, **characterized in that** the first guide (3) which in the upper end region of the wall (2) is articulated thereon, is arranged substantially horizontally in the closed position of the wall (2).

6. Device according to one of Claims 1 to 5, **characterized in that** the first guide (3) is constructed so as to be substantially L-shaped, wherein the short arm of the guide (3), having the rotation axis (3') between the wall (2) and the guide (3), is arranged substantially vertically in the closed position.

7. Device according to one of Claims 1 to 6, **characterized in that** the rotation axis (4") is arranged between the transport container (1) and the second guide (4) in a vertical post (6) laterally adjoining the pivotable wall (2) in its closed position.

8. Device according to Claim 7, **characterized in that** the second guide (4) which, in the lower end region of the wall, is articulated thereon, is arranged substantially vertically in the closed position of the wall (2).

9. Device according to one of Claims 1 to 8, **characterized in that** the second guide (4) is variable in length, e.g. is able to be lengthened telescopically.

10. Device according to Claim 9, **characterized in that** the second guide (4) is variable in length against an elastic force.

11. Device according to one of Claims 1 to 10, **characterized in that** the two guides (3, 4) pivot between the closed position and the open position of the wall through approximately 180°

12. Device according to one of Claims 1 to 11, **characterized in that** the wall (2) in an open position is arranged substantially horizontally over an upper cover surface (5) of the transport container (1).

13. Device according to one of Claims 1 to 12, **characterized in that** at least one guide (3, 4) is motor-driven.

14. Device according to one of Claims 1 to 13, **characterized in that** for locking the wall (2) in the closed position, closure elements (9, 9'; 12, 13) are provided on the upper and/or lower edge of the wall (2).

15. Device according to one of Claims 1 to 14, **characterized in that** the wall (2) has at least one channel (14) inclined slightly with respect to the horizontal.

16. Transport container (1), in particular vehicle body or container, **characterized in that** at least one device according to one of Claims 1 to 14 is provided for transferring a wall (2) between a closed position and an open position.

17. Transport container according to Claim 16, **characterized in that** two devices are provided for the transferring of two walls (2) of the transport container (1), lying opposite each other, between a closed position and an open position.

18. Transport container according to Claim 17, **characterized in that** vertical connecting supports (6) of the transport container (1) are constructed so as to be variable in length, e.g. telescopically.

## Revendications

1. Dispositif de transfert d'une paroi (2) d'un contenant de transport (1), en particulier d'une structure de véhicule ou d'un conteneur, entre une position de fermeture et une position d'ouverture, avec un premier et un deuxième bras articulés (3, 4), montés à pivotement autour d'un axe de rotation (3', 4' ; 3", 4") chacun sur le contenant de transport (1) et sur la paroi (2) du contenant de transport (1), la paroi (2) étant réalisée d'une seule pièce, et les deux axes de rotation (3', 4') entre les bras articulés (3, 4) et la paroi (2), pendant le transfert de la paroi (2), se déplaçant le long de trajectoires circulaires (A, B) différentes, **caractérisé en ce qu'**au moins un bras articulé (3, 4) est de longueur variable.

2. Dispositif selon la revendication 1, **caractérisé en ce que**, dans la position de fermeture de la paroi (2), le bras articulé (3, 4) à longueur variable est disposé sensiblement parallèlement à la paroi (2).

3. Dispositif selon la revendication 1, **caractérisé en ce que** le bras articulé (3, 4) à longueur variable est susceptible de varier de longueur de manière télescopique.

4. Dispositif selon la revendication 1 ou 2, **caractérisé en ce que** l'axe de rotation (3"), entre le contenant de transport (1) et le premier bras articulé (3) est disposé sensiblement à hauteur d'une surface de couverture supérieure (5) du contenant de transport (1).

5. Dispositif selon la revendication 4, **caractérisé en ce que** le premier bras articulé (3), articulé dans la zone d'extrémité supérieure de la paroi (2), sur celle-ci, dans la position de fermeture de la paroi (2), est disposé sensiblement horizontalement.

6. Dispositif selon l'une des revendications 1 à 5, **caractérisé en ce que** le premier bras articulé (3) est conformé sensiblement en L, la branche courte, présentant l'axe de rotation (3') entre la paroi (2) et le bras articulé (3);, di bras articulé (3), dans la position de fermeture, est disposée sensiblement verticalement.

7. Dispositif selon l'une des revendications 1 à 6, **caractérisé en ce que** l'axe de rotation (4"), entre le contenant de transport (1) et le deuxième bras articulé (4) est disposé dans un montant vertical (6) délimitant latéralement la paroi (2) pivotante, dans sa position de fermeture.

8. Dispositif selon la revendication 7, **caractérisé en ce que** le deuxième 35bras articulé (4), articulé dans la zone d'extrémité inférieure de la paroi, sur celle-ci, dans la position de fermeture de la paroi(2), est disposé sensiblement verticalement.

9. Dispositif selon l'une des revendications 1 à 8, **caractérisé en ce que** le deuxième bras articulé (4) est à longueur variable, c'est-à-dire est susceptible de varier de longueur de manière télescopique.

10. Dispositif selon la revendication 9, **caractérisé en ce que** le deuxième bras articulé (4) est à longueur variable, à l'encontre d'une force élastique.

11. Dispositif selon l'une des revendications 1 à 10, **caractérisé en ce que** les deux bras articulés (3, 4) pivotent d'à peu près 180°, entre la position de fermeture et la position d'ouverture de la paroi.

12. Dispositif selon l'une des revendications 1 à 11, **caractérisé en ce que** la paroi (2), dans une position d'ouverture, est disposé sensiblement horizontalement au-dessus d'une surface de couverture supérieure (5) du contenant de transport (1).

13. Dispositif selon l'une des revendications 1 à 12, **caractérisé en ce qu'**au moins un bras articulé (3, 4) est entraîné par un moteur.

14. Dispositif selon l'une des revendications 1 à 13, **caractérisé en ce que** des éléments de fermeture (9, 9' ; 12, 13) sont prévus sur l'arête supérieure et/ou inférieure de la paroi (2), pour verrouiller la paroi (2) dans la position de fermeture.

15. Dispositif selon l'une des revendications 1 à 14, **caractérisé en ce que** la paroi (2) présente au moins une goulotte (14) légèrement inclinée par rapport à l'horizontale.

16. Contenant de transport (1), en particulier structure de véhicule ou conteneur, **caractérisé en ce qu'**au moins un dispositif selon l'une des revendications 1 à 14 est prévu pour transférer une paroi (2) entre une position de fermeture et une position d'ouverture.

17. Contenant de transport selon la revendication 16, **caractérisé en ce que** 25deux dispositif sont prévus, pour transférer deux parois (2) opposées du contenant de transport (1) entre une position de fermeture et une position d'ouverture.

18. Contenant de transport selon la revendication 17, **caractérisé en ce que** des appuis de liaison (6) verticaux du contenant de transport (1) sont réalisés de manière à être de longueur variable, en particulier télescopiques.
